# EUROPÄISCHE PATENTSCHRIFT

(11) **EP 0 728 079 B1**
(45) Veröffentlichungstag und Bekanntmachung des Hinweises auf die Patenterteilung: **07.01.1999**
(21) Anmeldenummer: 95933390.7
(22) Anmeldetag: 18.09.1995
(51) Int. Cl.: B60H 1/34, F24F 13/15

(54) **LUFTVERTEILUNGSVORRICHTUNG**
AIR DIFFUSER DEVICE
DISPOSITIF DIFFUSEUR D'AIR

(30) Priorität: 21.09.1994 DE 4433698
(43) Veröffentlichungstag der Anmeldung: 28.08.1996
(73) Patentinhaber: Valeo Klimasysteme GmbH, 96476 Rodach (DE)
(72) Erfinder: SCHWARZ, Stefan, D-96450 Coburg (DE)
(74) Vertreter: COHAUSZ HANNIG DAWIDOWICZ & PARTNER
(86) Internationale Anmeldenummer: EP9503672
(87) Internationale Veröffentlichungsnummer: WO9609181

(56) Entgegenhaltungen:
- EP-A- 0 397 909
- DE-C- 3 719 837
- US-A- 5 364 303
- PATENT ABSTRACTS OF JAPAN vol. 10 no. 115 (M-474) ,30.April 1986 & JP,A,60 244619 (TOYODA GOSEI KK) 4.Dezember 1985,

## Beschreibung

Die Erfindung bezieht sich auf eine Luftverteilungsvorrichtung gemäß Anspruch 1; derartige Luftverteilungsvorrichtungen sind insbesondere für innenraumseitige Düsenöffnungen von Belüftungs- bzw. Klimaanlagen in Kraftfahrzeugen vorgesehen.

Durch die EP-B1-0 397 909 ist eine Luftverteilungsvorrichtung als Abschluß einer Luftdüse im Armaturenbrett eines Kraftfahrzeuges bekannt, bei der zur gezielten waagerechten Ausströmung eines Luftstromes um eine waagerechte Achse verschwenkbare, gegenseitig über eine Koppelstange in Mitnahmeverbindung stehende Richtlamellen dadurch verstellbar sind, daß ein Bedien-Verstellmittel senkrecht zur Schwenkachse der Richtlamellen entlang eines Gittersteges an der Vorderseite des Düsengehäuses geführt verschiebbar ist und dabei mit einer rückseitigen Zahnstange mit einem an der Vorderkante einer Richtlamelle angeformten Zahnbogen kämmt; dadurch wird beim Längsverschieben des Bedien-Verstellmittels entlang des Gittersteges die eine mit dem Zahnbogen versehene Richtlamelle im Sinne einer bestimmten Ausströmungsrichtung verstellt und werden die übrigen Richtlamellen über die gemeinsame Koppelstange in eine entsprechende Winkelstellung mitgenommen.

Weiterhin ist aus der DE-C-37 19 837 eine Luftverteilungsvorrichtung bekannt, bei dem durch ein einziges Bedien-Verstellmittel zwei Zueinander senkrecht stehende Richtlamellenebenen unabhängig voneinander verstellbar sind. Bei dieser Luftverteilungsvorrichtung ist das Bedien-Verstellmittel auf einer der unteren Lamellen der vorderen Richtlamellenebene lateral verschieblich angebracht. Die Verbindung zwischen dem Bedien-Verstellmittel und einer Lamelle der hinteren Richtlamellenebene erfolgt über ein Verbindungs-Verstellmittel. Dieses Verbindungs-Verstellmittel ist zum einen über ein Scharnier an dem Bedien-Verstellmittel und zum anderen über einen Kugelzapfen an einer der hinteren Lamellen angelenkt. Die Längen- bzw. Abstandsänderungen, die zwischen der hinteren Richtlamelle und dem Bedien-Verstellmittel auftreten, wenn dieses seitlich verschoben wird, werden dadurch kompensiert, daß der Kugelzapfen in einer fensterförmigen Ausnehmung des Verbindungs-Verstellmittels längsverschieblich einliegt.

Gemäß Aufgabe vorliegender Erfindung soll eine Luftverteilungsvorrichtung mit einer vorderen Richtlamellen-Ebene mit mehreren über eine erste Koppelstange verstellbaren, insbesondere waagerechten Richtlamellen, und mit einer dahinter angeordneten Richtlamellen-Ebene mit mehreren über eine zweite Koppelstange verstellbaren, insbesondere senkrechten Richtlamellen, geschaffen werden, bei der eine unabhängige Verstellung beider Richtlamellen-Ebenen über ein einziges Bedien-Verstellmittel erfolgt, das an einer Richtlamelle der ersten Richtlamellen-Ebene geführt verstellbar gelagert ist und die darüber hinaus einfach zu fertigen und zu montieren ist.

Diese Aufgabe ist durch die im Anspruch 1 gekennzeichnete Luftverteilungsvorrichtung gelöst.

Die Lösung dieser Aufgabe gelingt in fertigungs- und montagetechnisch besonders einfacher Weise dadurch, daß das Bedien-Verstellmittel über ein Kugelgelenk an ein Verbindungs-Verstellmittel zur Verstellung der Richtlamellen der hinteren Richtlamellen-Ebene angekoppelt ist, wobei das Bedien-Verstellmittel ein rückseitiges Kugelpfannenteil aufweist. Vorteilhafte Ausgestaltungen dieser Erfindung sind jeweils Gegenstand der Unteransprüche.

Durch die erfindungsgemäße Kugelgelenk-Verbindung zwischen einem vorderen, an einer Richtlamelle der vorderen Richtlamellen-Ebene geführten Bedien-Verstellmittel einerseits und einem Verbindungs-Verstellmittel zu den Richtlamellen der hinteren Richtlamellen-Ebene andererseits können die vorderen Richtlamellen über das Bedien-Verstellmittel im Sinne einer bestimmten Luftstromablenkung einerseits ohne Beeinflussung der Verstellung der Richtlamellen der hinteren Richtlamellen-Ebene gekippt werden und andererseits die Richtlamellen der hinteren Richtlamellen-Ebene durch Verschieben des Bedien-Verstellmittels entlang der führenden vorderen Richtlamelle auch dann sicher verstellt werden, wenn die vordere Richtlamelle, insbesondere in Sinne eines entsprechenden Designs der Vorderansicht der Luftverteilungsvorrichtung, von einer linearen Führung abweichend entlang einer bogenförmig ausgebildeten vorderen Richtlamelle zu führen ist.

Die Erfindung sowie weitere vorteilhafte Ausgestaltungen der Erfindung gemäß Merkmalen der Unteransprüche werden anhand schematisch dargestellter Ausführungsbeispiele in der Zeichnung näher erläutert; darin zeigen:
- FIG 1: die Frontansicht einer Luftverteilungsvorrichtung mit im Sinne eines bestimmten Designs bogenförmig verlaufenden Richtlamellen der vorderen Richtlamellen-Ebene;
- FIG 2: die Luftverteilungsvorrichtung gemäß FIG 1 in einem senkrechten Mittelschnitt;
- FIG 3: die Luftverteilungsvorrichtung gemäß FIG 1 in einem waagerechten Mittelschnitt.

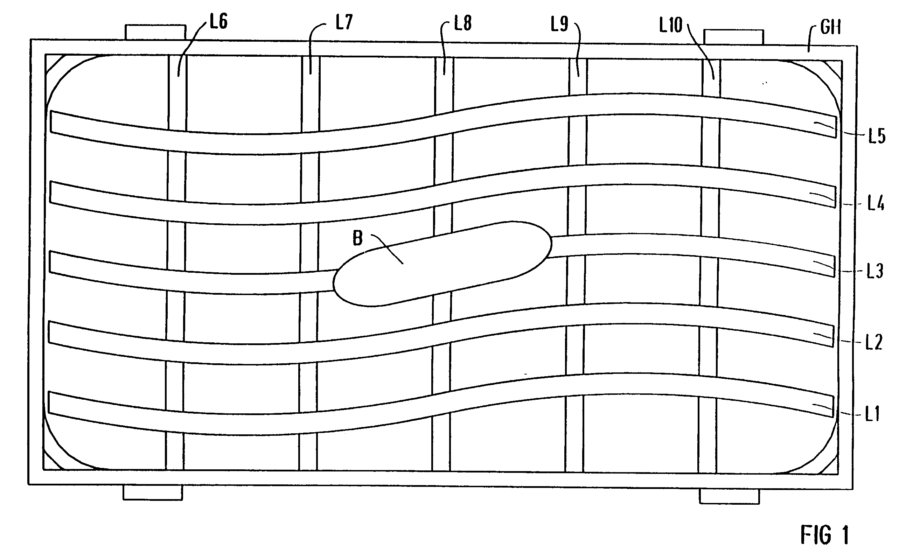

FIG 1 zeigt die Frontansicht einer Luftverteilungsvorrichtung mit fünf um eine waagerechte Achse verschwenkbaren, im Sinne eines bestimmten Designs leicht bogenförmig ausgebildeten Richtlamellen L1-L5 einer vorderen Richtlamellen-Ebene und mit fünf weiteren um eine senkrechte Schwenkachse verschwenkbaren Richtlamellen L6-L10 einer hinteren Richtlamellen-Ebene.

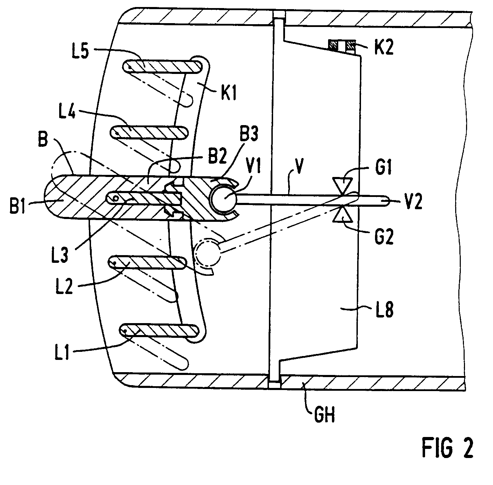

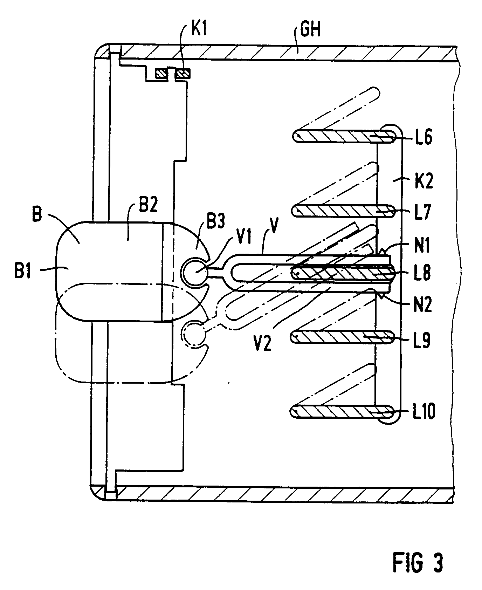

Wie insbesondere im näheren aus FIG 2,3 ersichtlich, sind die Richtlamellen L1-L5 der vorderen Richtlamellen-Ebene durch eine Koppelstange K1 und die Richtlamellen L6-L10 durch eine Koppelstange K2 derart miteinander verbunden, daß bei einer auf nur eine der Richtlamellen der jeweiligen Richtlamellen-Ebene einwirkenden Schwenkkraft sämtliche weiteren Richtlamellen dieser Richtlamellen-Ebene mitverstellbar sind. Zur gemeinsamen Verstellung sowohl der Richtlamellen L1-L5 der vorderen Richtlamellen-Ebene einerseits als auch der Richtlamellen L6-L10 der hinteren Lamellen-Ebene andererseits dient ein einziges Bedien-Verstellmittel B, das derart an einer Richtlamelle L3 der vorderen Richtlamellen-Ebene geführt ist, daß durch dessen Auf-Ab-Verschwenken sämtliche Richtlamellen L1-L5 der vorderen Richtlamellen-Ebene und durch dessen seitliches Verschieben entlang der Richtlamelle L3 sämtliche Richtlamellen L6-L10 der hinteren Richtlamellen-Ebene in eine bestimmte Winkelstellung bringbar sind.

Zur Verstellübertragung zwischen dem Bedien-Verstellmittel B und den Richtlamellen L6-L10 der hinteren Richtlamellen-Ebene bei einem seitlichen Verschieben des Bedien-Verstellmittels B entlang der Richtlamelle L3 ist ein an die Richtlamelle L8 der hinteren Richtlamellen-Ebene angelenktes Verbindungs-Verstellmittel V über ein Kugelgelenk V1;B3 mit dem Bedien-Verstellmittel B verbunden. Dazu ist nach einer Ausgestaltung der Erfindung das eine Ende V1 des Verbindungs-Verstellmittels V kugelförmig ausgebildet und von einem Kugelpfannenteil B3 am hinteren Ende des Bedien-Verstellmittels B umfaßt. Das andere Ende V2 des Verbindungs-Verstellmittels V ist längsverschieblich relativ zu der Richtlamelle L8 der hinteren Richtlamellen-Ebene derart gelagert, daß auch bei einem weiten seitlichen Auslenken des Bedien-Verstellmittels B entlang der Richtlamelle L3 der vorderen Richtlamellen-Ebene noch eine Verschwenkung der Richtlamelle L8 gewährleistet ist; in fertigungstechnisch besonders einfacher Weise ist dazu das andere Ende V2 des Verbindungs-Verstellmittels V gabelförmig ausgebildet und nimmt zwischen seinen gabelförmigen Enden in Gleitanlage die Richtlamelle L8 auf. Als weiteres Führungsmittel für das andere Ende V2 des Verbindungs-Verstellmittels V sind an die Richtlamelle L8, vorzugsweise einstückig, Gleitnocken G1;G2 vorgesehen, insbesondere angespritzt, zwischen denen das andere Ende V2 des Verbindungs-Verstellmittels V gleiten kann und somit an einem unerwünschten zu weiten senkrechten unkontrollierten Verschwenken gehindert wird.

Anstelle der hier dargestellten gabelförmigen Aufnahme kann auch eine nadelförmige Ausbildung des anderen Endes des Verbindungs-Verstellmittels V vorgesehen sein, wobei diese Nadel dann in eine Längslochführung der Richtlamelle L8 einsteckbar ist.

Im Sinne einer, insbesondere für eine axiale Montagetechnik vorteilhaften Fertigung besteht das Bedien-Verstellmittel B aus einem vorderen Bedienteil B1 und einem an der Richtlamelle L3 geführten mittleren, insbesondere gabelförmig auf die Richtlamelle L3 von dessen Vorderseite aufsteckbaren mittleren Führungsteil B2 sowie einem rückseitigen, kugelpfannenförmig ausgebildeten und als getrenntes vorfertigbares Bauteil bei der Montage auf dem mittleren Führungsteil B2 aufsteckbaren Kugelpfannenteil B3. Im Sinne einer einfachen axialen Stecktechnik ist der Kugelpfannenteil B3 axial derart geöffnet und elastisch ausgebildet, daß das kugelförmige Ende V1 des Verbindungs-Verstellmittels V das Kugelpfannenteil B3 des Bedien-Verstellmittels B eindrückbar ist.

## Patentansprüche

1. Luftverteilungsvorrichtung, insbesondere für innenraumseitige Düsenöffnungen von Belüftungs- bzw. Klimaanlagen in Kraftfahrzeugen, mit einer vorderen Richtlamellen-Ebene mit mehreren, über eine erste Koppelstange (K1) verstellbaren, insbesondere waagerechten, Richtlamellen (L1-L5) und einer dahinter angeordneten Richtlamellen-Ebene mit mehreren über eine zweite Koppelstange (K2) verstellbaren, insbesondere senkrechten, Richtlamellen (L6-L10), **dadurch gekennzeichnet,** daß ein entlang einer Richtlamelle (L3) der ersten Richtlamellen-Ebene geführtes Bedien-Verstellmittel (B), das ein rückseitiges Kugelpfannenteil aufweist, über ein Kugelgelenk (B3;V1) mit einem Verbindungs-Verstellmittel (V) für die Richtlamellen (L6-L10) der zweiten Richtlamellen-Ebene verbunden ist.

2. Luftverteilungsvorrichtung nach Anspruch 1, **gekennzeichnet** durch ein Bedien-Verstellmittel (B) mit einem Bedienteil (B1) im Bereich der vorderen Begrenzungsebene der ersten Richtlamellen-Ebene, ein an der einen Richtlamelle (L3) geführten mittleren Führungsteil (B2).

3. Luftverteilungsvorrichtung nach Anspruch 1 und/oder 2, **gekennzeichnet** durch ein Verbindungs-Verstellmittel (V) mit einem kugelförmigen, in dem Kugelpfannenteil (B3) des ersten Bedien-Verstellmittels (B) aufgenommenen einen Ende (V1) und ein an einer Lamelle (L8) der zweiten Richtlamellen-Ebene längsverschieblich zu deren Schwenkachse angelenkten anderen Ende (V2).

4. Luftverteilungsvorrichtung nach Anspruch 3, **gekennzeichnet** durch ein gabelförmiges, die eine Lamelle (L8) der Zweiten Richtlamellen-Ebene seitlich übergreifendes anderes Ende (V2) des Verbindungs-Verstellmittels (V).

5. Luftverteilungsvorrichtung nach Anspruch 3 und/oder 4, **gekennzeichnet** durch eine Führung des anderen Endes (V2) des Verbindungs-Verstellmittels (V) relativ zu der einen Lamelle (L8) der zweiten Richtlamellen-Ebene mittels an dieser vorgesehener, vorzugsweise einstückig angespritzter, Gleitnocken (G1;G2).

6. Luftverteilungsvorrichtung nach zumindest einem der Ansprüche 2-5, **gekennzeichnet** durch ein erstes Bedien-Verstellmittel (B), mit einem die eine Lamelle (L3) der ersten Richtlamellen-Ebene von deren Vorderseite her gabelförmig übergreifenden mittleren Führungsteil (B2) und ein an dessen Gabelspitzen verrastbaren Kugelpfannenteil (B3).

7. Luftverteilungsvorrichtung nach zumindest einem der Ansprüche 1-6, **gekennzeichnet** durch jeweils in axialer Montagetechnik zusammenbaubare Teile des Bedien-Verstellmittels (B) bzw. des Verbindungs-Verstellmittels (V).

8. Luftverteilungsvorrichtung nach zumindest einem der Ansprüche 1-7, **gekennzeichnet** durch eine von einer gradlinigen Ausrichtung abweichende Ausbildung der Lamellen (L1-L5), insbesondere der einen das Bedien-Verstellmittel (B) führenden Lamelle (L3) der ersten Richtlamellen-Ebene.

## Claims

1. An air diffusion device, in particular for nozzle apertures of ventilation and air conditioning systems in the interior space of motor vehicles, having a front deflecting fin plane with several, particularly horizontal, deflecting fins (L1 - L5) which can be adjusted via a first connecting rod (K1), and a deflecting fin plane disposed behind it having several, particularly vertical, deflecting fins (L6-L10) which can be adjusted via a second connecting rod (K2),
**characterised in that** a control adjustment means (B) mounted along a deflecting fin (L3) of the first deflecting fin plane, which comprises a ball socket part on the rear, is connected via a ball-and-socket joint (B3; V1) to a connection adjustment means (V) for the deflecting fins (L6-L10) of the second deflecting fin plane.

2. An air diffusion device according to Claim 1,
**characterised by** a control adjustment means (B) having an operating device (B1) in the region of the front limiting plane of the first deflecting fin plane, a central control part (B2) located on the one deflecting fin (L3).

3. An air diffusion device according to Claim 1 and/or 2,
**characterised by** a connection adjustment means (V) having a spherical one end (V1) housed in the ball socket part (B3) of the first control adjustment means (B)and another end (V2) hinged at a fin (L8) of the second deflecting fin plane in a longitudinally displaceable manner to its swivel axis.

4. An air diffusion device according to Claim 3,
**characterised by** a forked other end (V2) of the connection adjustment means (V) which laterally engages over a fin (L8) of the second deflecting fin plane.

5. An air diffusion device according to Claim 3 and/or 4,
**characterised by** a guide mechanism for the other end (V2) of the connection adjustment means (V) relative to the one fin (L8) of the second deflecting fin plane by means of sliding cams (G1; G2) which are provided thereon, preferably injected in one piece.

6. An air diffusion device according to at least one of Claims 2-5,
**characterised by** a first control adjustment means (B), having a central control device (B2) engaging in the manner of a fork over the one fin (L3) of the first deflecting fin plane from its front side and a ball socket part (B3) which can be locked on its fork prongs.

7. An air diffusion device according to at least one of Claims 1-6,
**characterised by** parts of the control adjustment means (B) or of the connection adjustment means (V) which can be assembled in an axial assembly process.

8. An air diffusion device according to at least one of Claims 1-7,
**characterised by** a design of the fins (L1-L5) which deviates from a rectilinear orientation, in particular of the one fin (L3) of the first deflecting fin plane which bears the control adjustment means (B).

## Revendications

1. Dispositif de distribution d'air, en particulier pour orifices à buse côté habitacle, de systèmes de ventilation ou de climatisation de véhicules automobiles, comportant dans un plan avant plusieurs lames directrices (L1 à L5), en particulier horizontales, manoeuvrables par l'intermédiaire d'une première barre d'accouplement (K1) et, dans un plan situé en arrière du précédent, plusieurs lames directrices (L6 à L10), en particulier verticales, manoeuvrables par l'intermédiaire d'une deuxième barre d'accouplement (K2), caractérisé par le fait qu'un moyen de commande et de manoeuvre (B) guidé le long d'une lame directrice (L3) du premier plan et présentant une partie arrière en forme de cuvette sphérique est joint par une articulation sphérique (B3, V1) à un moyen de liaison et de manoeuvre (V) pour les lames directrices (L6 à L10) du deuxième plan.

2. Dispositif de distribution d'air selon la revendication 1, caractérisé par un moyen de commande et de manoeuvre (B) ayant une partie de commande (B1) dans la zone du plan limite avant du premier plan de lames directrices, et une partie médiane de guidage (B2) guidée sur une lame directrice (L3).

3. Dispositif de distribution d'air selon l'une des revendications 1 et 2 ou les deux, caractérisé par un moyen de liaison et de manoeuvre (V) qui a une extrémité sphérique (V1) logée dans la partie en forme de cuvette sphérique (B3) du moyen de commande et de manoeuvre (B), et une autre extrémité (V2) articulée à une lame directrice (L8) du deuxième plan, à l'axe de rotation de celle-ci, de façon à être mobile longitudinalement sur celle-ci.

4. Dispositif de distribution d'air selon la revendication 3, caractérisé par le fait qu'une autre extrémité (V2) du moyen de liaison et de manoeuvre (V) est en forme de fourche et couvre latéralement une lame directrice (L8) du deuxième plan.

5. Dispositif de distribution d'air selon l'une des revendications 3 et 4 ou les deux, caractérisé par un guidage de l'autre extrémité (V2) du moyen de liaison et de manoeuvre (V) par rapport à une lame directrice (L8) du deuxième plan, au moyen d'ergots de glissement (G1, G2) prévus sur celle-ci et de préférence injectés à celle-ci.

6. Dispositif de distribution d'air selon au moins l'une des revendications 2 à 5, caractérisé par un moyen de commande et de manoeuvre (B) ayant une partie médiane de guidage (B2) qui coiffe, en forme de fourche, une lame directrice (L3) du premier plan depuis le côté avant de celle-ci, et une partie en forme de cuvette sphérique (B3) encliquetable à l'extrémité de la fourche de la partie médiane (B2).

7. Dispositif de distribution d'air selon au moins une des revendications 1 à 6, caractérisé par le fait que des parties respectivement du moyen de commande et de manoeuvre (B) et du moyen de liaison et de manoeuvre (V) peuvent être assemblées par la technique de montage axiale.

8. Dispositif de distribution d'air selon au moins l'une des revendications 1 à 7, caractérisé par une forme non droite des lames directrices (L1 à L5), en particulier d'une lame directrice (L3) du premier plan qui guide le moyen de commande et de manoeuvre (B).
